# EUROPÄISCHE PATENTSCHRIFT

(11) **EP 2 867 546 B1**
(45) Veröffentlichungstag und Bekanntmachung des Hinweises auf die Patenterteilung: **03.05.2017**
(21) Anmeldenummer: 13736793.4
(22) Anmeldetag: 21.06.2013
(51) Int. Cl.: F16B 21/18

(54) **SPRENGRING**
SNAP RING
CIRCLIP

(30) Priorität: 28.06.2012 DE 202012102395 U
(43) Veröffentlichungstag der Anmeldung: 06.05.2015
(73) Patentinhaber: Hugo Benzing GmbH & Co. KG, 70825 Korntal-Münchingen (DE)
(72) Erfinder: GUTSCHER, Horst, 71229 Leonberg (DE)
(74) Vertreter: Fleck, Hermann-Josef
(86) Internationale Anmeldenummer: PCT/EP2013/062969
(87) Internationale Veröffentlichungsnummer: WO 2014/001211

(56) Entgegenhaltungen:
- EP-A1- 1 681 477
- DE-A1-102010 053 001
- JP-U- S5 996 412

## Beschreibung

Die Erfindung bezieht sich auf einen Sprengring, bei dem ein im Wesentlichen radial gerichteter Ringabschnitt mit einer Stützfläche und ein im Wesentlichen axial gerichteter Ringabschnitt mit einer Mantelfläche einen L-förmigen Querschnitt bilden und ein Ringspalt vorhanden ist.

Ein derartiger Sprengring mit L-förmigem Querschnitt, wie er in der DE 33 46 661 C2 gezeigt ist, bietet im Einsatz die Möglichkeit, in einem zylindrischen Hohlraum eines Maschinenteils ein Maschinenelement in axialer Richtung abzustützen, wobei die axial gerichtete Mantelfläche mit ihrer Außenseite an der Innenwandung des Hohlraums anliegt und die radial nach innen gerichtete Stützfläche ein Widerlager zur Aufnahme axial gerichteter Kräfte bildet. Umgekehrt ist auch denkbar, dass die axial gerichtete Mantelfläche auf der Ringinnenseite angeordnet ist und die radial gerichtete Stützfläche nach außen zeigt, um den Sprengring auf einer Achse bzw. Welle aufzubringen und ein hohlzylindrisches Maschinenelement in axialer Richtung abzustützen. Hinsichtlich Montage und Verdrehsicherheit eines derartigen Sprengrings können sich Schwierigkeiten ergeben.

Auch die DE 10 2010 053 001 A1 zeigt einen im Querschnitt L-förmigen Haltering. Dieser bildet einen Teil einer Halteanordnung.

Andere Sprengringe mit Ringspalt und lappenartig nach innen, nach außen oder axial vorspringenden Endbereichen sind in der DE 60 2004 002 940 T2, DE 848 002 B, DE 1 903 295 U und der DE 830 716 B gezeigt, wobei sich neben den vorstehend genannten Schwierigkeiten auch bei der Fertigung und Anpassung Nachteile ergeben können.

Die JP S59 96 412 zeigt einen Haltering mit L-förmigem Querschnitt und lappenartig sich nach innen erweiternden Haltebereichen an einem radialen Ringabschnitt.

Die EP 1 681 477 A1 zeigt einen Sprengring mit nach außen oder innen abgebogenen Endabschnitten im Bereich des Ringspalts.

Der Erfindung liegt die Aufgabe zugrunde, einen Sprengring der eingangs genannten Art bereit zu stellen, der hinsichtlich Fertigung und/oder Anbringung im Einsatzfalle Vorteile bietet.

Diese Aufgabe wird mit den Merkmalen des Anspruches 1 gelöst. Hierbei ist vorgesehen, dass zumindest einer der beiden zu dem Ringspalt gerichteten Endabschnitte gegenüber dem übrigen Ringverlauf in der radialen Ebene (Normalebene zur Achse) durch Biegen ausgestellt ist und dass im Biegebereich der axiale oder der radiale Ringabschnitt mit einer Ausklinkung versehen ist.

Der mindestens eine ausgestellte Endabschnitt bietet zum einen vorteilhafte Montagemöglichkeiten beispielsweise mittels eines Werkzeugs und zum anderen auch die Möglichkeit einer verdrehsicheren Anordnung in oder auf einem Maschinenteil. Auch bei einer stabilen Ausführung des Sprengrings aus z. B. gehärtetem Federstahl kann der ausgestellte Endabschnitt durch Biegen vorteilhaft und mit hoher Genauigkeit hergestellt werden. Auch der radiale Ringabschnitt kann in gewünschter Breite in weiten Grenzen angepasst werden.

Eine für die Fertigung und Montage vorteilhafte Ausgestaltung besteht darin, dass sich die Ausklinkung vom Biegebereich bis zum freien Ende des betreffenden ausgestellten Endabschnitts erstreckt.

Verschiedene Anpassungsmöglichkeiten an unterschiedliche Anforderungen werden dadurch erreicht, dass der ausgestellte Endabschnitt gegenüber einer Tangente an dem anschließenden Ringbereich um einen Ausstellungswinkel zwischen 0° und 90°, beispielsweise zwischen 5° und 85°, zwischen 10° und 80° oder insbesondere zwischen 20° und 70° nach außen oder innen ausgestellt ist.

Zu einer stabilen Abstützung tragen die Maßnahmen bei, dass der Sprengring aus einem gehärteten federelastischen Metall besteht.

Zu einer stabilen Abstützung trägt ferner die Maßnahme bei, dass der axiale Ringabschnitt in axialer Richtung eine geringere Ausdehnung besitzt als der radiale Ringabschnitt in radialer Richtung.

Eine für die Herstellung und Stabilität vorteilhafte Ausgestaltung des Sprengrings besteht darin, dass sich der radiale Ringabschnitt von seinem an den axialen Ringabschnitt angrenzenden Übergangsbereich zu seinem freien Rand hin zunehmend verjüngt.

Die Erfindung wird nachfolgend anhand von Ausführungsbeispielen unter Bezugnahme auf die Zeichnungen näher erläutert. Es zeigen:
- Fig. 1: einen Sprengring in axialer Draufsicht,
- Fig. 2A: einen Endabschnitt des Sprengrings nach Fig. 1 im Bereich des Ringspalts in vergrößerter Detailansicht (Detail X),
- Fig. 2B: einen Querschnitt des Ringabschnitts nach Fig. 2A entlang einer Schnittlinie A-A,
- Fig. 2C: einen Querschnitt des Ringabschnittes nach Fig. 2A im Bereich des Endabschnitts entlang einer Schnittlinie B-B,
- Fig. 3: eine weitere Querschnittsdarstellung eines L-förmigen Sprengrings und
- Fig. 4: einen Ausschnitt eines Sprengrings mit L-förmigem Querschnitt nach Fig. 3 in perspektivischer Darstellung.

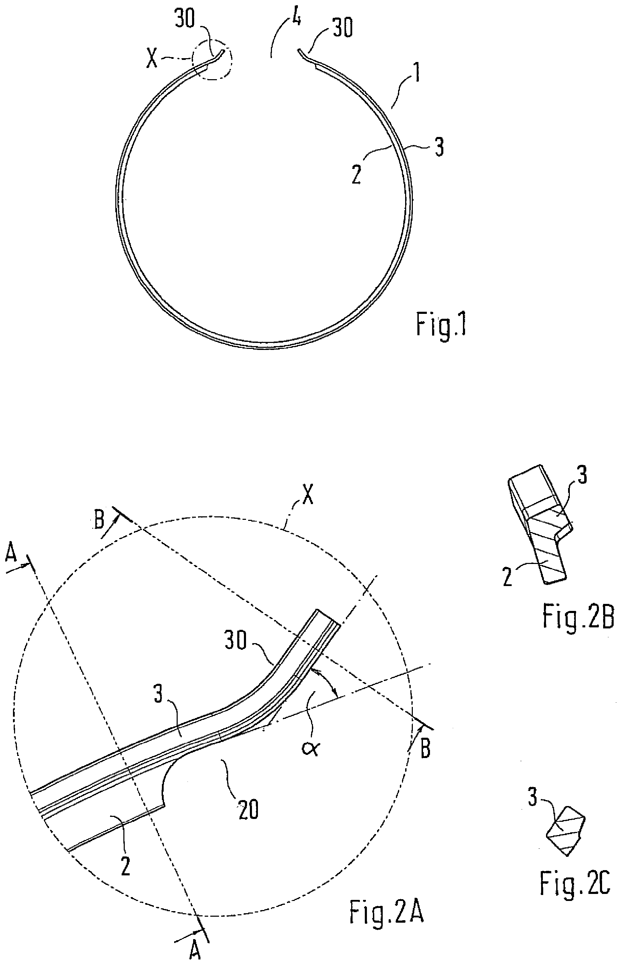

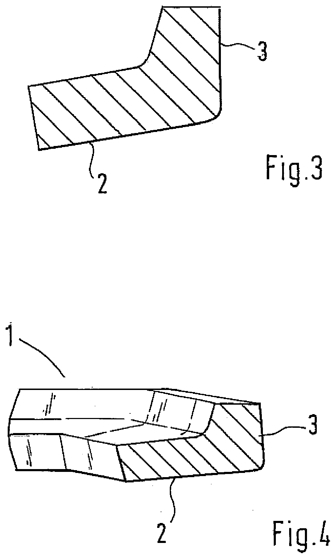

Fig. 1 zeigt einen Sprengring 1 aus federelastischem Material mit einem Ringspalt 4, der zum Einsatz in einem zylindrischen Hohlraum bzw. einer Bohrung eines Maschinenteils ausgebildet ist. Der Sprengring 1 weist an seinen zum Ringspalt 4 hin gerichteten Ringabschnitten bezüglich der umlaufenden Ringkontur nach außen ausgestellte Endabschnitte 30 auf. Wie im Zusammenhang mit Fig. 2A und dem in Fig. 2B entlang einer Schnittlinie A-A dargestellten Querschnitt ersichtlich, besitzt der Sprengring 1 einen im Wesentlichen L-förmigen Querschnitt mit einem radial nach innen gerichteten Ringabschnitt 2 und einem daran einstückig anschließenden axial gerichteten Ringabschnitt 3. Diese Ausbildung ist auch in den Darstellungen der Fig. 3 und 4 ersichtlich.

Im eingesetzten Zustand bietet der Sprengring 1 mit dem radial gerichteten Ringabschnitt 2 auf dessen von dem axial gerichteten Ringabschnitt 3 abgekehrter Seite eine Stützfläche 2 für ein in dem zylindrischen Hohlraum bzw. der Bohrung gelagertes Maschinenelement gegen eine axial wirkende Kraft und liegt mit der Außenfläche des axial gerichteten Ringabschnittes 3 an der Innenwandung des Hohlraums an. Der Sprengring 1 bietet damit bei entsprechender Festlegung in axialer Richtung eine bundartige Stützfläche bzw. ein Widerlager in axialer Richtung mit hoher Stützkraft. Wie aus den Querschnittsdarstellungen ersichtlich, können die beiden durch den radialen Ringabschnitt 2 und den axialen Ringabschnitt 3 gebildeten L-Schenkel im Bereich der Stützfläche und der Mantelfläche einen von einem rechten Winkel abweichenden, insbesondere stumpfen Winkel z. B. zwischen 60° und 90° aufweisen, womit beispielsweise eine Federelastizität auch in axialer Richtung bewirkt werden kann.

Wie die Querschnittsdarstellungen nach den Fig. 2B, 2C, 3 und 4 weiter zeigen, kann der axiale Ringabschnitt 3 von seinem Übergangsbereich zu dem radialen Ringabschnitt 2 ausgehend zu seinem freien Rand hin zunehmend verjüngt sein, womit die Stabilität und Stützkräfte ebenfalls geeignet beeinflusst und auch eine günstige Materialwahl (Materialart, Geometrie) ermöglicht wird. Vorteilhaft besteht der Sprengring 1 aus einem gehärteten federelastischen Metall, insbesondere Stahl.

Wie die Fig. 1 und 2A weiter zeigen, sind die beiden dem Ringspalt 4 zugekehrten Ringabschnitte mit einer Ausklinkung 20 im Bereich des jeweiligen radial gerichteten Ringabschnitts 2 versehen, wobei sich die Ausklinkung 20 über den Biegebereich hinweg bis zum Ende des jeweiligen Endabschnitts 30 erstreckt, wobei sich an den Biegebereich gerade Abschnitte im Bereich der Ausklinkung 20 anschließen können. Der Begrenzungsrand der Ausklinkung 20 geht dabei vom Innenrand des radial gerichteten Ringabschnitts 2 aus und verläuft anschließend kontinuierlich über eine Rundung in einen Abschnitt mit gleichbleibendem Abstand zur Außenkontur des axial gerichteten Ringabschnittes 3 in der Nähe von dessen Übergangsbereich zu dem (dort nicht mehr oder nur ansatzweise vorhandenen) radial gerichteten Ringabschnitt 2, wie aus der Querschnittsdarstellung nach Fig. 2C ersichtlich. Durch diese Ausbildung wird erreicht, dass der Endabschnitt 30 durch definiertes Ausbiegen aus der Umfangskontur des Sprengrings 1 unter genauer Einhaltung eines Ausstellwinkels α bezüglich einer Tangente am Ausgangspunkt der Abbiegung reproduzierbar ohne Materialbeschädigung hergestellt werden kann. Dabei können Sprengringe unterschiedlichen gehärteten Materials und/oder unterschiedlicher Geometrie zur Anwendung kommen.

Mittels der ausgestellten Endabschnitte 30 kann zum einen eine Montagehilfe zum Einsetzen des Sprengrings 1 geboten werden und zum anderen eine Verdrehsicherung, insbesondere für den Fall, dass das abgestützte Maschinenelement relativ zu dem aufnehmenden Maschinenteil einer Rotationsbewegung unterliegt. Der zylindrische Hohlraum ist erforderlichenfalls mit einer Ausnehmung versehen, in die die Endabschnitte 30 eingreifen können. Der Ausstellwinkel α gegenüber der Tangente im Ansatzpunkt der Abbiegung liegt in der Regel zwischen 0° und 90° (z. B. zwischen 5° und 90°, 10° und 90° oder 20° und 90°) und lässt sich aufgrund der Ausklinkung 20 in weiten Grenzen an die gestellten Anforderungen anpassen.

Bei einem alternativen Ausführungsbeispiel des Sprengrings 1 kann dieser zum Aufsetzen auf eine Achse oder Welle ausgebildet sein, wobei der radial gerichtete Ringabschnitt 2 nach außen gerichtet ist und der axiale Ringabschnitt 3 entlang der inneren Ringkontur angeordnet ist und die Endabschnitte 30 entsprechend (in einem Winkel zur Tangente wie vorstehend angegeben) nach innen ausgestellt sein können. In dem Maschinenteil kann dann eine Vertiefung bzw. nutförmige Aufnahme für die Endabschnitte 30 eingebracht sein.

Denkbar ist auch, dass der Sprengring 1 an nur einem zu dem Spalt 4 hin zeigenden Ringabschnitt einen in der genannten Weise ausgestellten Endabschnitt 30 trägt.

Die Herstellung des Sprengrings erfolgt vorteilhaft aus gehärtetem Profilmaterial (z. B. Profildraht) von einem Coil, wobei das Profilmaterial zu einem Ring entsprechend dem Durchmesser des Sprengrings 1 gewunden wird. Anschließend wird die Ausklinkung 20 durch Stanzen hergestellt. Im ausgestanzten Bereich wird der Endabschnitt 30 nach außen bzw. innen gestellt.

## Patentansprüche

1. Sprengring, bei dem ein im Wesentlichen radial gerichteter Ringabschnitt (2) mit einer Stützfläche und ein im Wesentlichen axial gerichteter Ringabschnitt (3) mit einer Mantelfläche einen L-förmigen Querschnitt bilden und ein Ringspalt (4) vorhanden ist,
**dadurch gekennzeichnet,**
**dass** zumindest einer der beiden zu dem Ringspalt gerichteten Endabschnitte (30) gegenüber dem übrigen Ringverlauf in der radialen Ebene durch Biegen ausgestellt ist und
**dass** im Biegebereich der axiale oder der radiale Ringabschnitt (2, 3) mit einer Ausklinkung (20) versehen ist.

2. Sprengring nach Anspruch 1,
**dadurch gekennzeichnet,**
**dass** sich die Ausklinkung (20) vom Biegebereich bis zum freien Ende des betreffenden ausgestellten Endabschnitts (30) erstreckt.

3. Sprengring nach Anspruch 1 oder 2,
**dadurch gekennzeichnet,**
**dass** der ausgestellte Endabschnitt (30) gegenüber einer Tangente an dem anschließenden Ringbereich um einen Ausstellungswinkel (α) zwischen 0° und 90° nach außen oder innen ausgestellt ist.

4. Sprengring nach einem der vorhergehenden Ansprüche,
**dadurch gekennzeichnet,**
**dass** er aus einem gehärteten federelastischen Metall besteht.

5. Sprengring nach einem der vorhergehenden Ansprüche,
**dadurch gekennzeichnet,**
**dass** der axiale Ringabschnitt (3) in axialer Richtung eine geringere Ausdehnung besitzt als der radiale Ringabschnitt (2) in radialer Richtung.

6. Sprengring nach einem der vorhergehenden Ansprüche,
**dadurch gekennzeichnet,**
**dass** sich der radiale Ringabschnitt (2) von seinem an den axialen Ringabschnitt (3) angrenzenden Übergangsbereich zu seinem freien Rand hin zunehmend verjüngt.

## Claims

1. A circlip in which a ring section (2) essentially directed radially, having a support surface, and a ring section (3) essentially directed axially form an L-shaped cross-section with a mantle surface, and a ring gap (4) is present,
**characterized in that**
at least one of the two end sections (30) directed toward the ring gap is flared with reference to the remaining course of the ring, in the radial plane, by means of bending, and that
in the bending region, the axial or the radial ring section (2, 3) is provided with a notch (20).

2. The circlip according to claim 1,
**characterized in that**
the notch (20) extends from the bending region all the way to the free end of the flared end section (30) in question.

3. The circlip according to claim 1 or 2,
**characterized in that**
the flared end section (30) is flared outward or inward by a flare angle (α) between 0° and 90° as compared with a tangent on the subsequent ring region.

4. The circlip according to one of the preceding claims,
**characterized in that**
it consists of a hardened spring-elastic metal.

5. The circlip according to one of the preceding claims,
**characterized in that**
the axial ring section (3) possesses a lesser expanse in the axial direction than the radial ring section (2) possesses in the radial direction.

6. The circlip according to one of the preceding claims,
**characterized in that**
the radial ring section (2) increasingly narrows from its transition region, which borders on the axial ring section (3), toward its free edge.

## Revendications

1. Circlip, dans lequel une section annulaire (2) dirigée de manière sensiblement radiale avec une surface d'appui et une section annulaire (3) dirigée de manière sensiblement axiale avec une surface de chemisage forment une section transversale en forme de L et un intervalle annulaire (4) est présent,
**caractérisé en ce que** :
au moins l'une des deux sections d'extrémité (30) dirigées vers l'intervalle annulaire est exposée vis-à-vis du profil annulaire restant dans le plan radial par flexion et,
dans la zone de flexion, la section annulaire axiale ou la section annulaire radiale (2, 3) est pourvue d'une entaille (20).

2. Circlip selon la revendication 1,
**caractérisé en ce que** :
l'entaille (20) s'étend de la zone de flexion à l'extrémité libre de la section d'extrémité exposée (30) concernée.

3. Circlip selon la revendication 1 ou 2,
**caractérisé en ce que** :
la section d'extrémité exposée (30) est exposée vis-à-vis d'une tangente sur la zone annulaire de jonction d'un angle d'exposition (α) entre 0° et 90° vers l'extérieur ou l'intérieur.

4. Circlip selon l'une quelconque des revendications précédentes, **caractérisé en ce que** :
il est constitué d'un métal élastique durci.

5. Circlip selon l'une quelconque des revendications précédentes, **caractérisé en ce que** :
la section annulaire axiale (3) possède dans la direction axiale une extension plus faible que la section annulaire radiale (2) dans la direction radiale.

6. Circlip selon l'une quelconque des revendications précédentes, **caractérisé en ce que** :
la section annulaire radiale (2) s'amincit de plus en plus de sa zone de transition adjacente à la section annulaire axiale (3) à son bord libre.
